## Europäisches Patentamt
## European Patent Office
## Office européen des brevets

(19)

(11) Publication number: **0 061 919**

**A2**

(12) # EUROPEAN PATENT APPLICATION

(21) Application number: **82301630.8**

(22) Date of filing: **29.03.82**

(51) Int. Cl.³: **B 62 D 33/04**
**B 62 D 25/20, B 62 D 29/04**

(30) Priority: **31.03.81 GB 8110015**

(43) Date of publication of application:
**06.10.82 Bulletin 82/40**

(84) Designated Contracting States:
**BE DE FR IT NL**

(71) Applicant: **Rawlings, Michael Townley**
**Meadow Farm Garvestone**
**Norwich Norfolk(GB)**

(71) Applicant: **Longe, John Michael**
**Redlands Hardingham Street**
**Hingham Norfolk NR9 4JB(GB)**

(72) Inventor: **Rawlings, Michael Townley**
**Meadow Farm Garvestone**
**Norwich Norfolk(GB)**

(72) Inventor: **Longe, John Michael**
**Redlands Hardingham Street**
**Hingham Norfolk NR9 4JB(GB)**

(74) Representative: **Stone, Patrick**
**28 Edenside Drive**
**Attleborough Norfolk NR17 2EL(GB)**

(54) Improvements in commercial vehicle bodies.

(57) A vehicle body floor comprises a one piece moulded or extruded structure of fibre-reinforced plastics material (12) incorporating a structural core (16), with an integrally associated sub-frame in the form of longitudinal and or transverse reinforcing ribs (18, 19) into which the structural core is extended. Analogously moulded frames (36) or pillars (34) are bonded by plastics adhesive to the floor (10) to form a vehicle body structure.

FIG.4.

EP 0 061 919 A2

Specification


Improvements in Commercial Vehicle Bodies


This invention relates generally to commercial vehicle bodies, and more specifically to an improved structure of vehicle body and a method of production thereof.

The aim of the invention is to enable a lightweight, high strength commercial vehicle body which can be aerodynamically profiled thereby, in conjunction with reduced weight compared with conventional body structures, to provide improved performance in relation to fuel consumption.

According to one aspect of the invention, there is provided a vehicle body floor comprising a hollow moulding or extrusion of reinforced plastics material having a structural core.

The floor preferably has a moulded or extruded sub-frame, e.g. in the form of longitudinal and or transverse supports or strengthening ribs, of reinforced plastics material, at least the longitudinal ribs also preferably being hollowly formed with a structural core for adding strength and or insulation. Conveniently, the floor and sub-frame are moulded together as a one piece structure with

-2-

a unified structural core.

The floor, including the sub-frame, may be moulded or extruded of plastics material such as polyester or epoxy resin, reinforced with glass, carbon or aramid fibres or a mixture thereof. The structural core can be made of aluminium, glass fibre honeycomb, polyurethane or similar structural, preferably foamed, plastics material, or end grain balsa wood. The use of other materials is not, of course, excluded from the invention.

According to another aspect of the invention, there is provided a moulding unit for producing the above-described floor, comprising a bottom skin mould and a top skin mould fitting to said bottom skin mould to embrace the structural core, said moulding unit having shutters for length and width adjustment and preferably also a shutter for depth adjustment.

The invention is also concerned with a commercial vehicle body incorporating the above-described floor. According to this aspect of the invention, the front and rear frames or pillars of the body are moulded of fibre reinforced plastics material, and are integrally bonded to the moulded floor by plastics adhesive. Said frames or pillars may again be hollow moulded or extruded and, especially in the case of the rear frame, may be filled with a structural core. Similar materials to those

previously mentioned may be employed for moulding of the frames or pillars, and likewise for the structural core when provided. Steel section may alternatively be employed as the core in the front and rear frames or pillars, and likewise in the cant rails, which are similarly moulded of similar materials. These cantrails are bonded by adhesive to the front and rear frames or pillars or to the side panels mounted between said front and rear pillars or frames. These side panels, when necessary joined by suitable jointing sections, may be of conventional commercially available, construction and be adhesively bonded to the front and rear frames or pillars.

It is an important feature of the invention that all joints between the side panels and the frames, pillars and cant rails are flush on the exterior, thereby to promote good airflow. In addition, the front pillars, which lie at the front corners of the vehicle, are aerodynamically profiled likewise to assist good airflow. This is especially valuable when the body is a trailer lying to the rear of a cab-roof mounted air deflector. Flush joints at the front and rear panels may also be provided, but are less important.

The invention is applicable to all types of commercial vehicle body, whether the vehicle be a directly powered lorry or a trailer. In the latter case, the one-piece floor can also be and preferably is, integrated with the chassis. Thus, more specifically, the invention is useful for freight box bodies and trailers, freezer box bodies and trailers, curtain sided bodies and trailers, sliding side bodies and trailers and shutter side box bodies and trailers. Having regard to these possibilities, the references to front and rear frames and pillars, cant rails and side panels will be understood to be applicable only to body structures wherein such components are necessarily employed, and that alternative components conventional to vehicle body construction, such as curtain supports, shutter frames and the like, may be employed instead when appropriate. In the simplest possible case, the complete vehicle body of this invention may simply comprise a one-piece moulded floor, and this may also in effect constitute the vehicle chassis in the case of a trailer.

Having regard to the above generalities, it will be appreciated that the one-piece floor may be moulded with any of a variety of fittings appropriate to intended usage. In all instances, fittings for the attachment of runners or chassis gear will preferably be provided on the underside of the floor, these fittings, more especially in the form of steel or alloy bobbins, being integrally incorporated in the floor structure during its production by moulding. Thus, in one convenient construction, the floor is moulded with a sub-frame of longitudinal and/or transverse supports or reinforcing ribs on its underside, the bobbins or other fittings being incorporated in these ribs. The number and structure of the supports or reinforcing ribs provided will depend on the specified floor loading, but it is especially convenient for at least the longitudinal ribs which form the sub-frame to be hollowly formed as part of the internal hollow section of the floor as a whole. This enables the core structure to be extended into the interior of at least said longitudinal ribs, when desirable. However, it is within the compass of the invention for the sub-frame, in the form of a lattice of longitudinal and transverse supports, preferably with a structural core in at least the longitudinal supports, to be moulded separately from the floor proper and bonded thereto by suitable means such as plastics adhesive.

The floor can also be moulded with fittings such as a pallet loading track incorporated at the upper surface. Furthermore, as part of the moulding process, the upper surface can be finished smooth or with a non-slip surface. Alternatively, a heavy duty top lining, for example of a non-slip type, can be applied to the upper surface of the floor after emergence from the mould.

The invention will now be exemplified with reference to the accompanying drawings, in which:-

Figure 1 shows a one-piece vehicle body floor in perspective, the floor having an integral sub-frame of longitudinal and transverse supports;

Figure 2 is a transverse cross-section through the floor;

Figure 3 diagrammatically illustrates a moulding unit for production of a modified floor having only longitudinal supports;

Figure 4 very diagrammatically illustrates a vehicle body construction incorporating the floor; and

Figure 5 shows in substantial enlargment the cross-section of a front corner pillar.

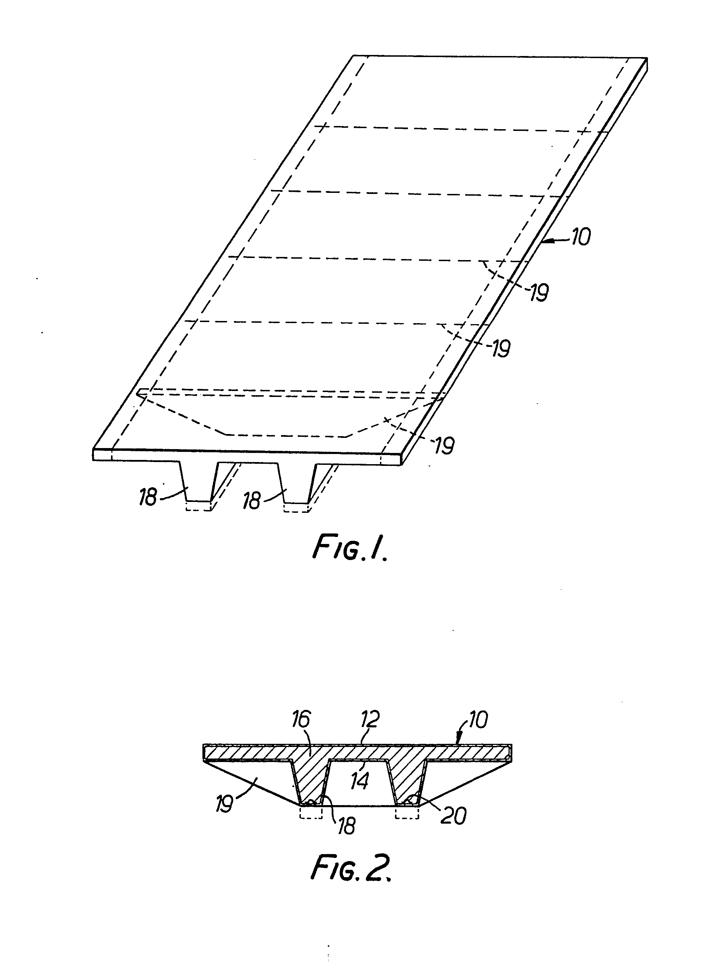

Referring to Figures 1 and 2, the floor 10 is moulded in one piece of fibre reinforced plastics material. An approximate size for such a floor, all in one moulded piece, may be 2.4 metres wide by 6 metres long. The moulded floor 10 is a hollow section defined by an upper skin 12 and a bottom skin 14, and a similar skin defining the shallow side walls, enclosing a structural core 16. Longitudinal supports or under-ribs 18 and transverse supports or under-ribs 19 are moulded integrally with the hollow floor section, and at the same time fixing bobbins 20 are incorporated in the longitudinal ribs. The longitudinal ribs 18 are hollowly formed and the structural core 16 is extended into them.    As illustrated, the transverse ribs are thinner and moulded entirely of the reinforced plastics material.    However, neither, either one or both of the longitudinal and transverse supports may be hollowly formed to incorporate the structural core, as appropriate to the intended maximum floor loading. The bobbins 20 enable the floor to be mounted to a chassis or, when the supports or ribs 18, 19 are themselves in effect to constitute the chassis of a trailer, enable the attachment of the conventional runners.

A variety of materials which may be used for moulding of the skins and for positioning in the moulding unit to form the structural core between the moulded skins, have previously been exemplified.

The supports or under-ribs 18, 19 in effect constitute a sub-frame for the floor, which may if desired be separately moulded and bonded, as by plastics adhesive, to the floor proper.    Preferably, however, the entire floor, including the sub-frame, is formed as a one-piece structure.

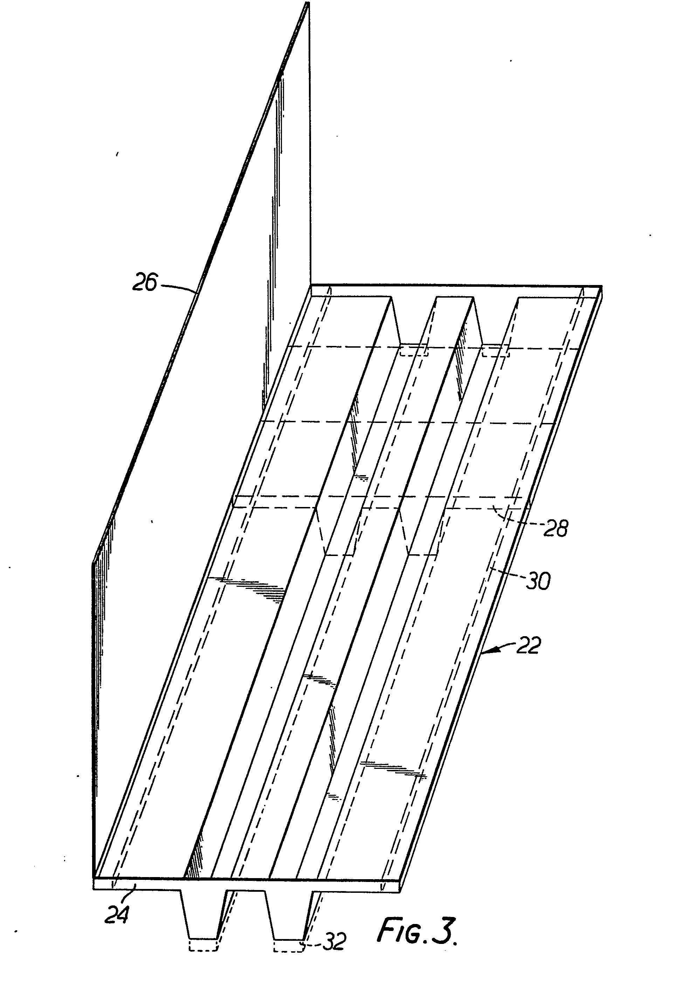

An example of moulding unit, for producing a one-piece moulded floor 10 having longitudinal supports or under-ribs 18, is generally referenced 22 in Figure 3.    This mould can conveniently be made of polyester or epoxy resin reinforced with glass fibres.    It comprises a bottom skin mould 24 and a top skin mould 26 separable or hingable away from the bottom skin mould, and is adjustable for length, width and depth by means of shutters 28, 30, 32, respectively. Vehicle and trailer body floors may typically vary in length from 4.267 m to more than 12 m (14 ft to 40 ft) and in width from 2.286 m to 2.476 m (7.5 ft to 8.125 ft). The depth shutter 32 varies the depth of the ribs 18 so that the floor can have an overall depth of from 17.78 cm to 30.48 cm (7 in. to 12 in.), the depth skin to skin of the actual flooring area being about 4 cm.

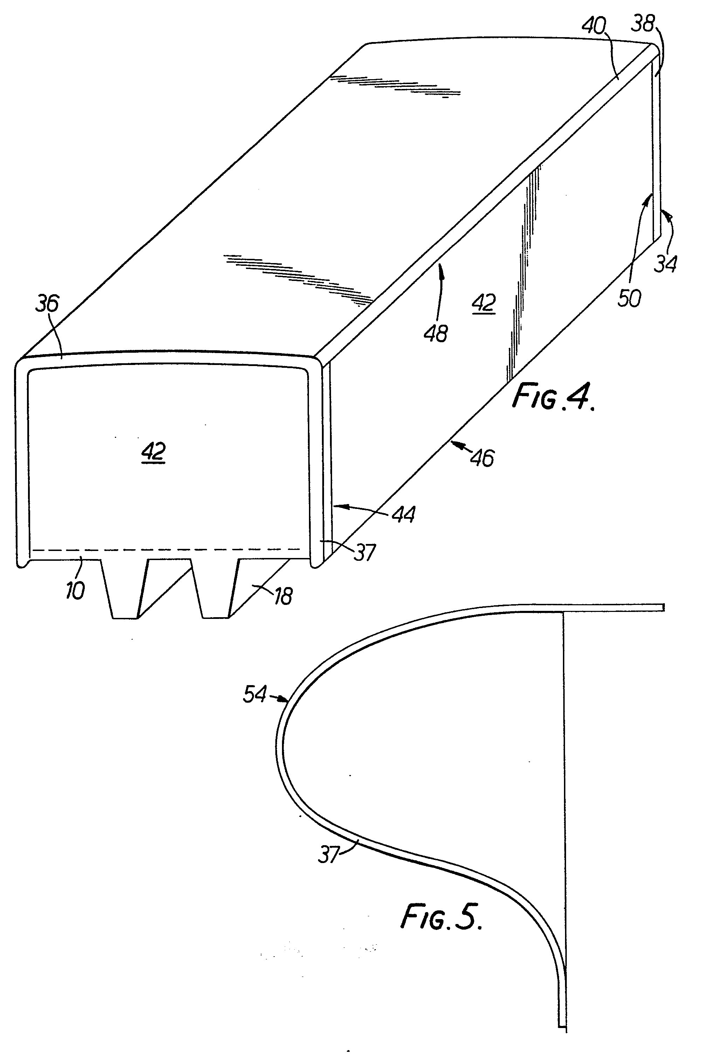

Figure 4 shows a vehicle body construction 34 based on the floor 10. This vehicle body 34 is for a trailer, and the under-ribs 18 effectively constitute an integral chassis structure. A front frame 36 is moulded of fibre-reinforced plastics material, preferably with a hollow section filled with a structural core. A rear frame 38 is similarly moulded. The same materials may be employed for manufacture of these components as in the manufacture of the floor.

The front and rear frames 36, 38 are adhesively bonded to the floor 10 to form an effectively integral structure therewith. Top corner rails 40 or cant rails may be similarly bonded front to rear.

The fixed walls 42 of the body are then formed by mounting modular panels, generally of conventional design and connected by suitable joining sections, between the front and rear frames 36, 38.  As indicated at the points marked 44, 46, 48, 50, all joints between frames, rails and panels are effected with flush exteriors, thereby to improve air flow past the vehicle when the latter is travelling.  This flush jointing is enabled by the use of adhesive instead of fixing bolts or rivets.

In addition, the front pillars 37 of the front frame 36 are moulded hollow with a specially shaped external profile, as shown in greatly enlarged cross section 52 in Figure 5, thereby also to assist aerodynamic efficiency.  Such profiled front corners to the vehicle body are especially valuable when the body is a trailer body mounted behind a cab having a roof mounted air deflector.

Sliding doors or shutters can readily be incorporated instead of a fixed wall, e.g. at the rear, and at the sides mountings for curtains may be provided in place of fixed walls.

It will be appreciated that the arrangement illustrated in the drawings is by way of example only, and that numerous and various modifications thereof are possible within the scope of the invention.

Claims

1.    A vehicle body floor unit comprising a hollow moulded or extruded floor section (10) of reinforced plastics material (12) having a structural core (16), said floor unit also including a moulded or extruded sub-frame (18, 19) of reinforced plastics material, which floor section and sub-frame are either integrally moulded or extruded as a one piece structure or are separately moulded or extruded and bonded together.

2.    A vehicle body floor unit according to claim 1, wherein the plastics material is fibre reinforced, in particular with reinforcing fibres which are glass, carbon or aramid fibres or a mixture thereof.

3.    A vehicle body floor unit according to claim 1 or claim 2, wherein the structural core is made of aluminium, glass fibre honeycomb, polyurethane or analogous preferably foamed plastics material, or end grain balsa wood.

4.    A vehicle body floor unit according to claim 1 or claim 2 or claim 3, wherein the sub-frame comprises longitudinal and/or transverse floor reinforcing ribs (18, 19), at least some of which are hollowly formed and incorporate a structural core, the latter preferably formed by extending the structural core of the floor section into at least some of the hollow ribs.

5.    A vehicle body floor unit according to any of claims 1 to 4, wherein the sub-frame is moulded or extruded with integrally incorporated bobbins or analogous fittings (20) for chassis attachment.

6.    A vehicle body structure based on the floor unit of any of claims 1 to 5, including front and/or rear wall frames or pillars (36, 38) moulded or extruded of the said reinforced plastics material and bonded by plastics adhesive to the floor, said frames or pillars also preferably being moulded or extruded with a hollow cross section which embodies a structural core.

7.    A vehicle body structure according to claim 6, also having moulded or extruded cant rails (40), which are preferably hollowly formed with a structural core, bonded by plastics adhesive to the same frames and/or pillars or to side wall panels bonded by plastics adhesive to said frames and/or pillars.

8.    A vehicle body structure according to claim 6 or claim 7, having side wall panels (42) bonded to the said frames and/or pillars with flush exterior joints (44, 46, 48, 50).

9.    A vehicle body structure according to any of claims 6 to 8, having front pillars which are shaped to present an aerodynamically profiled exterior surface for promoting good airflow (Figure 5).

0061919

-12-

10.    A method of producing the vehicle body floor unit
of any of claims 1 to 5, according to which it is moulded
of reinforced plastics material in a length and width
adjustable mould having top and bottom skins which fit
together to embrace a structural core which is to be
enclosed within the plastics moulding material (Figure 3).

FIG. 1.

FIG. 2.

0061919

FiG.3.

Fig. 4.

Fig. 5.